(19) Europäisches Patentamt
European Patent Office
Office européen des brevets

(11) Numéro de publication: **0 299 819 B1**

# (12) FASCICULE DE BREVET EUROPEEN

(45) Date de publication de fascicule du brevet: **26.08.92**

(51) Int. Cl.[5]: **C01B 21/098**

(21) Numéro de dépôt: **88401532.2**

(22) Date de dépôt: **20.06.88**

## (54) Procédé de régulation des masses moléculaires des polychlorophosphazènes et des polyorganophosphazènes en dérivant et les agents de régulation mis en oeuvre dans ce procédé.

(30) Priorité: **02.07.87 FR 8709406**

(43) Date de publication de la demande:
**18.01.89 Bulletin 89/03**

(45) Mention de la délivrance du brevet:
**26.08.92 Bulletin 92/35**

(84) Etats contractants désignés:
**AT BE CH DE ES FR GB GR IT LI LU NL SE**

(56) Documents cités:
**EP-A- 0 026 685**
**EP-A- 0 159 020**
**EP-A- 0 178 997**
**DE-A- 2 754 245**
**FR-A- 2 548 188**
**US-A- 3 370 020**

**CHEMICAL ABSTRACTS, vol. 64, no. 8, 11 avril 1966, colonne 11397d, Columbus, Ohio, US; & SU-A-176 416 (V.S. YAKUBOVICH et al.) 02-11-1965**

**CHEMICAL ABSTRACTS, vol. 96, no. 26, 28 juin 1982, page 738, abrégé no. 228032e, Columbus, Ohio, US; A. PFUETZNER et al.: "Existence of N-(diphenoxyphosphoryl) trichlorophosphazene", & Z. CHEM. 1982, 22 (3), 104-5**

**INORGANIC CHEMISTRY, vol. 5, no. 10, octobre 1966, pages 1709-1715, H.R. ALLCOCK et al.: "Phosphonitrilic compounds. VI. High molecular weight poly(alkoxy- and aryloxy-phosphazenes)"**

(73) Titulaire: **ELF ATOCHEM S.A.**
**4 & 8, Cours Michelet La Défense 10**
**F-92800 Puteaux(FR)**

(72) Inventeur: **Passimourt, Nadine**
**5, Rue des Alliés**
**F-64000 Pau(FR)**
Inventeur: **Pagniez, Guy**
**2 bois de l'Eglise**
**F-64230 Poey de Lescar(FR)**
Inventeur: **Potin, Philippe**
**9 Rue de Pâquerettes**
**F-64140 Billère(FR)**

(74) Mandataire: **Rochet, Michel et al**
**ELF ATOCHEM S.A. Département Propriété Industrielle 4-8, Cours Michelet La Défense 10 - Cedex 42**
**F-92091 Paris-La-Défense(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services

## Description

L'invention a pour objet la préparation de polychlorophosphazènes et de polyorganophosphazènes en dérivant, et plus précisément un procédé de régulation des masses moléculaires de tels polymères. Elle concerne également l'additif mis en oeuvre en vue de cette régulation. Elle concerne encore les polychlorophosphazènes et les polyorganophosphazènes en dérivant à la chaîne desquels est lié chimiquement ledit additif.

On a décrit (brevets US 3.370.020 et 4.374.815) des voies d'accès à des polychlorophosphazènes de masses moléculaires moyennes ou élevées. Ces techniques consistent essentiellement à polymériser l'hexachlorocyclotriphosphazène mais ces voies d'accès ne permettent quasiment pas de choisir et de contrôler la masse moléculaire des polymères.

Dans le brevet européen publié sous le numéro 0026685, une autre voie d'accès au polychlorophosphazène est proposée. Cette technique consiste à polycondenser le N(dichlorophosphoryl)trichlorophosphazène avec libération contrôlée de $POCl_3$, selon le schéma :

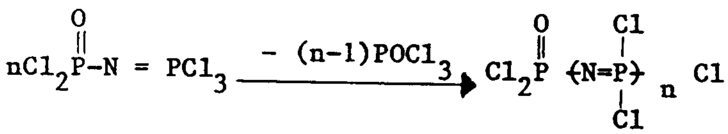


(I) (II)

(en abrégé $P_2NOCl_5$) .

Cette technique permet d'obtenir une gamme de polymères non réticulés de masses moléculaires variées en modifiant le temps de séjour et en contrôlant de ce fait la polycondensation au niveau du $POCl_3$ libéré. On peut ainsi obtenir des polymères qui, après substitution par le phénate de sodium, conduisent à des polydiphénoxyphosphazènes de masse moléculaire pouvant aller de quelques dizaines de mille à environ un million. Il faut cependant noter que le seul contrôle du temps de séjour ne permet pas d'obtenir avec précision des polymères de polydispersité suffisamment faible lorsque la masse moléculaire est inférieure à deux cent mille.

L'invention propose un procédé de préparation de polychlorophosphazènes non réticulés et des polyorganophosphazènes en dérivant, par polycondensation du N(dichlorophosphoryl)trichlorophosphazène, ledit procédé permettant d'obtenir avec précision la masse moléculaire souhaitée.

L'invention a plus précisément pour objet un procédé de préparation de polychlorophosphazène et des polyorganophosphazènes en dérivant, de masse moléculaire régulée, par polycondensation du N-(dichlorophosphoryl)trichlorophosphazène, ledit procédé étant caractérisé en ce que la réaction de polycondensation est effectuée en présence d'un ou plusieurs produits de formule :

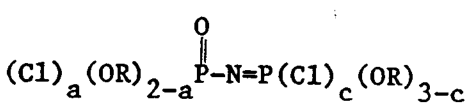

(III)

dans laquelle R représente un radical fluoro-alkyle renfermant de 2 à 6 atomes de carbone ou un radical aryle mono- ou polycyclique non substitué ou substitué par un ou plusieurs atomes d'halogène tels que chlore, fluor, par un ou plusieurs groupements alkyles perfluorés ou par un radical $NO_2$, a est égal à 1 ou 2, et c est égal à 0, 1 ou 2, le nombre total de groupements OR étant égal à 1, 2 ou 3.

Les produits de formule (III) peuvent être préparés par mise en contact d'un sel organique de métal alcalin avec le produit de formule (I). A titre d'illustration des sels organiques de métaux alcalins, on peut citer notamment le phénate de sodium, le naphténate de sodium, le trifluoroéthoxylate de sodium.

D'une manière générale, le rapport molaire sel organique de métal alcalin/$P_2NOCl_5$ peut aller de 0,1 à 3. De préférence ce rapport est compris entre 1 et 3, et plus avantageusement entre 1,2 et 2,7. Selon le rapport choisi, on obtiendra un produit de formule (III) défini ou un mélange de produits de formule (III) portant 1, 2 ou 3 groupements OR, sur l'atome de phosphore du groupement phosphazène (1 ou 2 OR) ou répartis sur les deux atomes de phosphore.

La réaction du sel organique de métal alcalin avec $P_2NOCl_5$ peut s'effectuer avantageusement en

milieu solvant, par exemple dans l'éther diéthylique.

Ce mélange de produits de formule (III) constitue un autre objet de l'invention.

La composition du mélange et l'action régulatrice du produit de formule (III) ou du mélange de plusieurs de ces produits peuvent être parfaitement définies lors de la préparation dudit produit ou dudit mélange.

Cette préparation fait intervenir divers paramètres tels que l'emploi ou non d'un solvant ou diluant et sa nature lorsqu'il en est fait usage, la concentration des réactifs, la vitesse d'addition du sel organique de métal alcalin dans le milieu contenant $P_2NOCl_5$ et la température de la réaction.

Le solvant ou diluant, lorsqu'il existe, ne doit ni être réactif à l'égard des produits mis en réaction ni avoir d'influence sur la polycondensation du produit de formule (I) si le produit de formule (III) est mis en oeuvre en solution. A cette fin il est possible :

- soit d'utiliser un produit à très bas point d'ébullition dans le but de pouvoir l'éliminer totalement avant introduction du produit de formule (III) dans le milieu de polycondensation, tel que par exemple l'éther diéthylique.
- soit un produit inerte lors de la polycondensation, tel qu'un hydrocarbure aromatique comportant un ou plusieurs substituants halogénés, ledit produit pouvant être choisi par exemple parmi les chlorobenzènes ou les chlorodiphényles, notamment le trichlorodiphényle.

Ainsi qu'il a été précisé, la réaction du sel organique de métal alcalin avec $P_2NOCl_5$ peut se faire sans solvant ou diluant. Lorsqu'il est fait appel à un solvant ou diluant, en particulier pour améliorer le contact des réactifs et, dans le but de ne pas réduire la productivité du réacteur, il est avantageux d'opérer avec une concentration comprise entre 10 et 30 %.

S'agissant de la vitesse d'addition du sel organique de métal alcalin dans $P_2NOCl_5$, il convient de choisir une vitesse permettant de contrôler la température de la réaction et de ne pas former d'accumulation de sel organique de métal alcalin dans le milieu. De ce fait on choisit avantageusement une vitesse relativement lente pour la mise en contact du sel de métal alcalin avec le composé de formule (I). A titre d'ordre de grandeur, on peut opérer entre 1 et 5 heures.

La réaction entre le sel organique de métal alcalin et le composé de formule (I) est rapide et exothermique. D'une manière générale on effectue cette réaction à une température pouvant être comprise entre -30 et 120 ° C.

Le produit ou le mélange de produits de formule (III) peut être introduit à l'état pur ou en solution dans le milieu de polycondensation. Cette introduction peut se faire, soit avant ou au début de ladite polycondensation, soit au cours de ladite polycondensation. Dans cette seconde hypothèse, on effectuera avantageusement cette introduction au cours de la période correspondant à un départ appréciable de $POCl_3$, c'est-à-dire pendant les 95 premiers pourcents de conversion.

La réaction de polycondensation proprement dite peut être réalisée dans les conditions décrites par exemple dans le brevet européen 0026685 cité plus haut, et dont le contenu est incorporé présentement par référence.

On pourra notamment suivre les indications de ce document concernant la durée de réaction, la température, la pression, la possibilité de conduire la réaction successivement à des températures différentes et/ou à des pressions différentes. On pourra également se reporter à ce document au sujet du traitement de purification du polychlorophosphazène obtenu.

La réaction de polycondensation, effectuée en présence du ou des produits de formule (III) conformément au présent procédé, peut voir sa vitesse modifiée par addition complémentaire dans le milieu réactionnel de bis(dichlorophosphoryl)imide, selon la demande de brevet français n°2612170 et/ou d'une amine tertiaire, selon la demande de brevet français n°2612172. Le contenu des deux demandes de brevet français précitées est incorporé présentement par référence.

A titre purement indicatif, on indiquera ci-après des modalités opératoires recommandées pour la polycondensation :

- réaction effectuée en masse ou en présence d'un solvant organique,
- température comprise entre 200 et 350 ° C et de préférence entre 250 et 320 ° C,
- durée de la réaction entre 5 et 40 heures.

La masse moléculaire du polychlorophosphazène obtenu est sensiblement inversement proportionnelle au taux de produit de formule (III) introduit pour un nombre donné de groupement OR dans ledit produit. A titre d'information, un taux d'environ 50 % molaire (par rapport au produit de formule (I) ) de produit de formule (III), exprimé en produit deux fois substitué par des groupements OR conduit à de très faibles masses moléculaires, le composé de formule (II) pouvant être considéré comme un dimère, alors qu'un taux de 0,1 % molaire conduit à des masses moléculaires de plusieurs centaines de mille.

D'une manière préférentielle, on utilisera un taux d'au moins 0,4 % molaire et n'excédant pas en général 20 % molaire.

Sans que la demanderesse ne soit liée par une explication, il y a lieu de penser que la régulation de la masse moléculaire du polychlorophosphazène s'obtient par une participation des composés de formule (III) à la réaction de polycondensation qui se propage par élimination d'un atome de chlore du groupement $PCl_3$ avec le radical $Cl_2P(O)$. De ce fait la présence calculée de substituants OR dans le mélange de produits de formule (III) associée à la connaissance de la réactivité des divers atomes de chlore du produit de formule (I) permet de former des polymères ayant la masse moléculaire désirée. De tels polymères, dont la chaîne macromoléculaire comprend des produits de formule (III) liés chimiquement, constituent un autre objet de l'invention.

Il apparaît ainsi que les produits de formule (III) ou les compositions renfermant plusieurs produits de formule (III) à teneurs variées en groupements OR constituent d'excellents régulateurs de masse moléculaire des polychlorophosphazènes. Ils présentent de ce fait un intérêt considérable dans la préparation de tels polymères et des polyphosphazènes en dérivant, notamment des polyaryloxyphosphazènes et des polyfluoroalcoxyphosphazènes. Les nouveaux produits de formule (III) permettent notamment d'obtenir avec précision les masses moléculaires adaptées aux applications auxquelles sont destinées les polyphosphazènes, applications telles que revêtements de fils et de câbles électriques, revêtements de sols ignifuges, liants pour peintures.

Les exemples suivants illustrent l'invention.

EXEMPLE 1 : Substitution de $P_2NOCl_5$ par le phénate de sodium

Par action du sodium sur le phénol, on prépare une suspension de phénate de sodium dans l'éther contenant 30,6 g (0,264 mole) de phénate de sodium dans 150 ml d'éther. Cette suspension maintenue homogène par agitation, est amenée de façon régulière, en deux heures, sur une solution de 35,6 g (0,132 mole) de $P_2NOCl_5$ et de 10 ml d'éther, en contrôlant la température à - 3 ° C. L'ensemble est laissé 20 heures dans ces conditions. NaCl est éliminé par filtration. L'éther est évaporé et remplacé par 60 g de trichlorodiphényle. On obtient ainsi une solution contenant 45,8 g/100 g (0,119 mole/100 g) de régulateur exprimé en produit de formule :

$Cl_2P(O)\text{-}N=PCl(OR)_2$ (B)

Le spectre de RMN $^{31}P$ dans le trichlorodiphényle (référence $H_3PO_4$) donne les résultats suivants :

- Monosubstitué
  $\delta$ = - 2,2 et 12,8 ppm J = 35,4 hz
- Disubstitué
  Massif centré sur - 11,7 ppm constitué de deux doublets avec J = 46,4 hz
- Trisubstitué
  $\delta$ = - 12,3 et - 23,8 ppm J = 53,7 hz

D'après les rapport des intensités on peut donner au régulateur la composition molaire suivante :

- 81 % de produits de formule (III) substitués sur le phosphore du groupement $-N=P\leftarrow$, répartis comme suit :
  . 10,1 % de produit $Cl_2P(O)\text{-}N=PCl_2OR$ (A)
  . 75,1 % de produit $Cl_2P(O)\text{-}N=PCl(OR)_2$ (B)
  . 14,8 % de produit $Cl_2P(O)\text{-}N=P(OR)_3$ (C)
- 19 % de produits de formule (III) de formule :

  $Cl(OR)P(O)\text{-}N=PCl(OR)_2$ (D)

  (R = phényle)

EXEMPLE 2 : Substitution de $P_2NOCl_5$ par le phénate de sodium

Le mode opératoire est identique à celui de l'exemple 1, à l'exception des quantités mises en jeu qui sont les suivantes :

Phénate de sodium : 77,3 g (0,667 mole) dans 380 ml d'éther,

$P_2NOCl_5$ : 89,9 g (0,333 mole) dans 25 ml d'éther

Trichlorodiphényle : 150 g.

La température de réaction est de 20 ° C et l'addition du phénate de sodium dans $P_2NOCl_5$ se fait en 1 heure.

A partir du spectre de RMN $^{31}P$, on peut donner au régulateur obtenu la composition molaire suivante :

- produits substitués sur le phosphore du groupement -N=P←: 87,5 %, se répartissant comme suit :
  . (A) = 54,55 %
  . (B) = 41,43 %
  . (C) = 4,02 %
  . (D) = 12,5 %

La solution finale obtenue contient 46,05 g/100g (0,120 mole/100 g) de régulateur exprimé en produit (II)

EXEMPLE 3 : Polycondensation (témoin)

Dans un réacteur agité, équipé d'un système de recette de $POCl_3$ et de pressurisation sous gaz inerte, on introduit 165 g (0,612 mole) de $P_2NOCl_5$ et 153 g de trichlorodiphényle. L'ensemble est chauffé à 280°C pendant 27 heures. On recueille en 135 mn 78 g de $POCl_3$, soit 83 % de la quantité théorique.

Après refroidissement, la solution de polymère (polychlorophosphazène) est diluée par ajout de 500 ml de benzène. 10 % de cette nouvelle solution sont introduits dans un réacteur contenant 1,47 mole de phénate de sodium et 170 g de diglyme. Après distillation du benzène, le mélange est chauffé à 120°C pendant 48 heures.

On ajoute ensuite 360 ml de benzène et on neutralise par HCl concentré. Le polymère et le chlorure de sodium sont essorés et lavés au benzène.

Le gâteau est mis en suspension dans 10 fois son volume de méthanol, puis essoré. La même opération est effectuée avec le mélange méthanol/eau = 80/20 (en poids), puis à l'eau à 80°C.

Le polymère est dissous dans 40 fois son volume de THF à chaud et filtré. Cette solution est concentrée jusqu'à obtention d'un sirop et versée lentement dans 1 l d'eau sous forte agitation.

Le précipité est essoré et séché sous vide à 80°C.

Le polydiphénoxyphosphazène obtenu présente les caractéristiques suivantes :

- viscosité intrinsèque = 69,9 ml/g (THF, 30°C)
- chromatographie de perméation de gel (équivalent polystyrène)
  . $\overline{Mw}$ = 348.000
  . $\overline{Mn}$ = 39.000
  . $\overline{Mw}/\overline{Mn}$ = 8.92
- diffusion de la lumière
  . $\overline{Mw}$ = 556.000

EXEMPLE 4

L'expérience de l'exemple 3 est répétée avec 155 g (0.575 moles) de $P_2NOCl_5$ et 90,2 g de trichlorodiphényle. On ajoute à cette solution 100 g de la solution de limitateur préparé selon l'exemple 1, soit 45,8 g (0,119 moles) de régulateur (exprimé en produit B). Le ratio régulateur/$P_2NOCl_5$ est ainsi de 20,9 % molaires.

L'essai est ensuite conduit comme dans l'exemple 3 pendant égalemednt 27 heures. Le polychlorophosphazène obtenu est substitué pour obtenir le polydiphénoxyphosphazène selon le protocole décrit dans le même exemple 3.

L'analyse par RMN $^{31}P$ du polychlorophosphazène montre la disparition du doublet centré sur 8 ppm attribué à l'extrémité de chaînes N = $PCl_3$, ce qui montre la fixation du régulateur sur cette extrémité.

Les résultats suivants ont été obtenus sur le polydiphénoxyphosphazène :

- tonométrie :
  . $\overline{Mn}$ = 1.600
- chromatographie par perméation de gel (équivalent polystyrène)
  . $\overline{Mw}$ = 13.400 $\overline{Mn}$ = 1.300

EXEMPLE 5

L'expérience de l'exemple 3 est répétée avec 143,66 g (0,533 moles) de $P_2NOCl_5$, 121,6 g de trichlorodiphényle et 6,328 g ($7{,}53.10^{-3}$ moles) de la solution de régulateur préparée selon l'exemple 1. le ratio régulateur/$P_2NOCl_5$ est ainsi de 1,41 % molaire.

Le polydiphénoxyphosphazène obtenu présente les caractéristiques suivantes :

- viscosité intrinsèque = 27,7 ml/g (THF, 30°C)

- chromatographie par perméation de gel (équivalent polystyrène)
  - . $\overline{Mw}$ = 74.800
  - . $\overline{Mn}$ = 11.900
  - . $\overline{Mw}/\overline{Mn}$ = 6,3

EXEMPLE 6

L'expérience de l'exemple 3 est répétée avec 153,25 g (0,568 mole) de $P_2NOCl_5$, 130 g trichlorodiphényle et 19,33 g (0,023 mole) de solution de régulateur préparée selon l'exemple 1. Le ratio régulateur/$P_2NOCl_5$ est ainsi de 4,05 % molaire.

Le polydiphénoxyphosphazène obtenu présente les caractéristiques suivantes :

- viscosité intrinsèque = 19,9 ml/g (THF, 30 °C)
- chromatographie par perméation de gel (équivalent polystyrène)
  - . $\overline{Mw}$ = 43.400
  - . $\overline{Mn}$ = 6.640
  - . $\overline{Mw}/\overline{Mn}$ = 6,5

EXEMPLES 7 A 13

L'expérience de l'exemple 3 est répétée en enregistrant la quantité de $POCl_3$ dégagée en fonction du temps, ce qui permet de mesurer la réactivité. On obteint ainsi le temps $t_{80}$ au bout duquel 80 % du $POCl_3$ théorique ont dégazé. La vitesse de croissance des masses moléculaires étant proportionelle à ce $t_{80}$, les comparaisons de masses obtenues lors de ces différents essais ont été effectuées au bout d'un temps total représentant 20 fois $t_{80}$ (suffisant pour atteindre la stabilisation de la croissance des chaînes).

Les paramètres de ces essais sont consignés dans le tableau 2/1.

Les résultats consignés dans le tableau 2/2 montrent la très bonne corrélation entre le taux de régulateur et la masse moléculaire.

TABLEAU 2/1

| Exemples N° | $P_2NOCl_5$ (moles) | TCDP (g) | S | $S/P_2NOCl_5$ % molaires | $t_{80}$ h | D(h) |
|---|---|---|---|---|---|---|
| 7 (témoin) | 0,564 | 139,97 | 0 | 0 | 1,550 | 31 |
| 8 | 0,575 | 154,91 | 2,54 | 0,442 | 1,390 | 27,77 |
| 9 | 0,568 | 144,15 | 5 | 0,880 | 1,056 | 21,11 |
| 10 | 0,597 | 139,21 | 10,92 | 1,830 | 1,115 | 22,30 |
| 11 | 0,622 | 152,69 | 12,03 | 1,930 | 0,629 | 12,59 |
| 12 | 0,586 | 140,13 | 24,43 | 4,169 | 0,760 | 15,21 |
| 13 | 0,542 | 133,68 | 57,27 | 10,57 | 0,278 | 5,55 |

S = Solution de régulateur préparée selon l'exemple 2 (en mole .$10^3$ de régulateur B)
D = Durée totale de polycondensation (heures)
TCDP = trichlorodiphényle

TABLEAU 2/2

| Exemples N° | (η) ml/g | CPG (équiv. PS) | | | DDL $\overline{Mw}$ |
|---|---|---|---|---|---|
| | | $\overline{Mw}$ | $\overline{Mn}$ | $\overline{Mw}/\overline{Mn}$ | |
| 7 (témoin) | 48,1 | 226.000 | 22.200 | 10,1 | 383.000 |
| 8 | 46 | 187.000 | 25.800 | 7,2 | 376.000 |
| 9 | 41,5 | 173.000 | 25.400 | 6,8 | 283.000 |
| 10 | 30 | 90.100 | 13.600 | 6,6 | 179.000 |
| 11 | 28,5 | 90.400 | 13.900 | 6,5 | 163.000 |
| 12 | 21,8 | 54.400 | 9.180 | 5,9 | 130.000 |
| 13 | 13,9 | 30.000 | 4.500 | 6,5 | 55.450 |

(η) = Viscosité intrinsèque
CPG = Chromatographie par perméation de gel
DDL = Diffusion de la lumière

EXEMPLE 14

L'expérience 3 est répétée en effectuant des prises d'échantillons en cours d'essais. Les quantités mises en jeu sont les suivantes :

- $P_2NOCl_5$ = 228,37 g (0,847 mole)
- Trichlorodiphényle = 207,30 g
- Solution de régulateur préparée selon l'exemple 2 = 21,61 g (0,0259 mole), sont un ratio régulateur/$P_2NOCl_5$ = 3,06 % molaires.

On observe un $t_{80}$ de 0,354 h.

Les prises d'échantillons sont effectuées après 3,54 - 7,09 - 10,63 - 14,16 heures.

Après substitution de ces échantillons, le polydiphénoxyphosphazène obtenu donne les résultats suivants :

| Temps | (η) 30 °C THF ml/g | CPG (équiv. polystyrène) | | | DDL $\overline{Mw}$ |
|---|---|---|---|---|---|
| | | $\overline{Mw}$ | $\overline{Mn}$ | $\overline{Mw}/\overline{Mn}$ | |
| 3,54 | 17,4 | 30.800 | 5.800 | 5,3 | 70.200 |
| 7,09 | 21,7 | 56.000 | 8.900 | 6,3 | 108.000 |
| 10,63 | 21,4 | 59.800 | 9.240 | 6,5 | 114.000 |
| 14,16 | 20,8 | 59.500 | 8.680 | 6,9 | 109.000 |

CPG = Chromatographie par perméation de gel
DDL = Diffusion de la lumière

EXEMPLE 15 : Substitution de $P_2NOCl_5$ par le β-naphténate de sodium

On applique, pour cette substitution, le mode opératoire de l'exemple 2 avec les quantités suivantes :

- naphténate de sodium = 89,64 g (0,540 mole) dans 500 ml d'éther
- $P_2NOCl_5$ = 70,07 g (0,270 mole) dans 59 ml d'éther
- trichlorodiphényle = 150 g

On obtient ainsi une solution contenant 48,8 g/100 g (0,092 mole/100 g) de régulateur exprimé en dichlorophosphoryldinaphtoxychlorophosphazène(II).

On donne en figure 1 le spectre de RMN $^{31}P$ (référence $H_3PO_4$) de la solution dans le trichlorodiphényle décrite ci-avant.

EXEMPLE 16

L'expérience de l'exemple 3 est répétée avec 148 g (0,549 mole) de $P_2NOCl_5$ et 137 g de

trichlorodiphényle. On ajoute à cette solution 25,96 g (0,0239 mole) de la solution de régulateur préparée dans l'exemple 15, soit un ratio régulateur/$P_2NOCl_5$ de 4,35 % molaires.

L'essai est conduit comme dans l'exemple 3 pendant 29,8 heures à 280 ° C.

Le polydiphénoxyphosphazène obtenu présente les caractéristiques suivantes :

- Viscosité intrinsèque = 22,1 ml/g
- Chromatographie par perméation de gel (équivalent polystyrène)
  . $\overline{Mw}$ = 56.300
  . $\overline{Mn}$ = 9.880
  . $\overline{Mw}/\overline{Mn}$ = 5,7

EXEMPLE 17 : Substitution de $P_2NOCl_5$ par le trifluoroéthoxylate de sodium

On applique, pour cette substitution, le mode opératoire de l'exemple 2 avec les quantités suivantes :

- Trifluoroéthoxylate de sodium = 39,41 g (0,323 mole) dans 300 ml d'éther
- $P_2NOCl_5$ = 43,52 g (0,161 mole) dans 20 ml d'éther
- trichlorodiphényle = 75 ml

On obtient ainsi une solution contenant 48,71 g/100 g (0,110 mole/100 g) de régulateur exprimé en dichlorophosphoryldi(trifluoroéthoxy)chlorophosphazène (B).

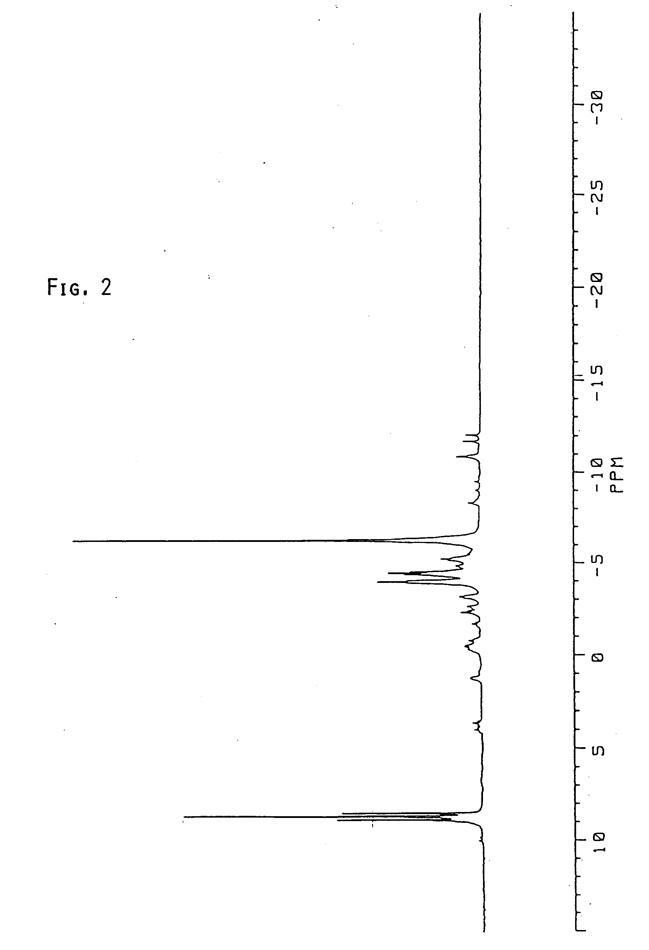

On donne en figure 2 le spectre de RMN $^{31}P$ (référence $H_3PO_4$) de la solution décrite ci-avant.

EXEMPLE 18

L'expérience de l'exemple 3 est répétée avec 157,4 g (0,584 mole) de $P_2NOCl_5$ et 145 g de trichlorodiphényle. On ajoute à cette solution 28,04 g (0,0308 mole) de la solution de régulateur préparée dans l'exemple 17, soit un ratio régulateur/$P_2NOCl_5$ de 5,28 % molaires.

L'essai est conduit comme dans l'exemple 3, pendant 27 heures à 280 ° C.

Le polydi(trifluoroéthoxy)phosphazène obtenu après substitution présente les caractéristiques suivantes :

- Viscosité intrinsèque = 17,4 ml/g
- Chromatographie par perméation de gel (équivalent polystyrène)
  . $\overline{Mw}$ = 45.600
  . $\overline{Mn}$ = 6.160
  . $\overline{Mw}/\overline{Mn}$ = 7,4

## Revendications

1. Procédé de préparation de polychlorophosphazène et des polyorganophosphazènes en dérivant, de masse moléculaire régulée, par polycondensation du N(dichlorophosphoryl)trichlorophosphazène, ledit procédé étant caractérisé en ce que la réaction de polycondensation est effectuée en présence d'un ou plusieurs produits de formule :

$$(Cl)_a(OR)_{2-a}\overset{O}{\overset{\|}{P}}-N=P(Cl)_c(OR)_{3-c} \qquad \text{(III)}$$

dans laquelle R représente un radical fluoro-alkyle renfermant de 2 à 6 atomes de carbone ou un radical aryle mono- ou polycyclique non substitué ou substitué par un ou plusieurs atomes d'halogène tels que chlore, fluor, par un ou plusieurs groupements alkyles perfluorés ou par un radical $NO_2$, a est égal à 1 ou 2, et c est égal à 0, 1 ou 2, le nombre total de groupements OR étant égal à 1, 2 ou 3.

2. Procédé selon la revendication 1, caractérisé en ce que le produit de formule (III), exprimé en produit deux fois substitué par des groupements OR, est utilisé à un taux compris entre 0,1 et 50 moles pour 100 moles de N(dichlorophosphoryl)trichlorophosphazène (I) soumis à la réaction de polycondensation.

3. Procédé selon la revendication 2, caractérisé en ce que le taux de produit de formule (III) est compris entre 0,4 et 20 moles pour 100 moles de produit (I).

**4.** Procédé selon l'une quelconque des revendications 1 à 3, caractérisé en ce qu'on introduit le produit ou un mélange de produits de formule (III) dans le milieu réactionnel avant ou au début de la réaction de polycondensation.

**5.** Procédé selon l'une quelconque des revendications 1 à 3, caractérisé en ce qu'on introduit le produit ou un mélange de produits de formule (III) en cours de polycondensation.

**6.** Procédé selon la revendication 5, caractérisé en ce que le produit ou mélange de produits de formule (III) est introduit au cours de la période correspondant à l'élimination des 95 premiers pourcents de $POCl_3$ produit pendant la réaction de polycondensation.

**7.** Une composition comprenant plusieurs produits de formule (III) renfermant des taux différents de substituants OR sur les atomes de phosphore.

**8.** Polychlorophosphazènes non réticulés et polyorganophosphazènes en dérivant, à la chaîne desquels est lié chimiquement un produit ou mélange de produits de formule (III).

## Claims

**1.** Process for the preparation of polychlorophosphazene and of the polyorganophosphazenes derived therefrom, of controlled molecular mass, by polycondensation of N-(dichlorophosphoryl)-trichlorophosphazene, the said process being characterised in that the polycondensation reaction is carried out in the presence of one or more products of formula:

$$(Cl)_a(OR)_{2-a}\overset{O}{\overset{\|}{P}}-N=P(Cl)_c(OR)_{3-c} \qquad (III)$$

in which R denotes a fluoroalkyl radical containing from 2 to 6 carbon atoms or a mono- or polycyclic aryl radical, unsubstituted or substituted by one or more halogen atoms such as chlorine or fluorine, by one or more perfluoroalkyl groups or by an $NO_2$ radical, a is equal to 1 or 2, and c is equal to 0, 1 or 2, the total number of OR groups being equal to 1, 2 or 3.

**2.** Process according to Claim 1, characterised in that the product of formula (III), expressed as a product substituted twice with OR groups, is employed in a proportion of between 0.1 and 50 moles per 100 moles of N-(dichlorophosphoryl)trichlorophosphazene (I) subjected to the polycondensation reaction.

**3.** Process according to Claim 2, characterised in that the proportion of product of formula (III) is between 0.4 and 20 moles per 100 moles of product (I).

**4.** Process according to any one of Claims 1 to 3, characterised in that the product or a mixture of products of formula (III) is introduced into the reaction medium before or at the beginning of the polycondensation reaction.

**5.** Process according to any one of Claims 1 to 3, characterised in that the product or a mixture of products of formula (III) is introduced during the polycondensation.

**6.** Process according to Claim 5, characterised in that the product or mixture of products of formula (III) is introduced during the period corresponding to the removal of the initial 95 per cent of $POCl_3$ produced during the polycondensation reaction.

**7.** A composition comprising a number of products of formula (III) containing different proportions of substituents OR on the phosphorus atoms.

**8.** Uncrosslinked polychlorophosphazenes and polyorganophosphazenes derived therefrom, to the chain of which a product or a mixture of products of formula (III) is chemically linked.

## Patentansprüche

1. Verfahren zur Herstellung von Polychlorphosphazen und davon abgeleiteten Polyorganophosphazenen von bestimmter Molekularmasse durch Polykondensation eines N(Dichlorphosphoryl)-trichlorphosphazens, dadurch gekennzeichnet, daß die Polykondensationsreaktion in Gegenwart von einem oder mehreren Produkten der Formel:

$$(Cl)_a(OR)_{2-a}\overset{\overset{\displaystyle O}{\|}}{P}-N=P(Cl)_c(OR)_{3-c} \qquad (III)$$

ausgeführt wird, in der R einen Fluor-Alkylrest mit 2 bis 6 Kohlenstoffatomen oder einen mono- oder polyzyklischen Arylrest bedeutet, der nicht substituiert oder durch ein oder mehrere Halogenatome wie Chlor, Fluor, durch eine oder mehrere perfluorierte Alkylgruppen oder durch einen $NO_2$-Rest substituiert ist, a gleich 1 oder 2, c gleich 0, 1 oder 2, wobei die Gesamtzahl der OR-Gruppen gleich 1, 2 oder 3 ist.

2. Verfahren nach Anspruch 1, dadurch gekennzeichnet, daß das Produkt der Formel (III), berechnet als durch die OR-Gruppen zweifach substituiertes Produkt, in einem Verhältnis zwischen 0,1 und 50 mol pro 100 mol des in der Polykondensationsreaktion eingesetzten N(Dichlorphosphoryl)-trichlorphosphazens (I), angewendet wird.

3. Verfahren nach Anspruch 2, dadurch gekennzeichnet daß das Verhältnis des Produkts der Formel (III) zwischen 0,4 und 20 mol pro 100 mol des Produkts (I) beträgt.

4. Verfahren nach einem der Ansprüche 1 bis 3, dadurch gekennzeichnet, daß man das Produkt oder ein Gemisch der Produkte der Formel (III) dem Reaktionsmedium vor oder zu Beginn der Polykondensationsreaktion zufügt.

5. Verfahren nach einem der Ansprüche 1 bis 3, dadurch gekennzeichnet, daß man das Produkt oder ein Gemisch der Produkte der Formel (III) im Laufe der Polykondensation zufügt.

6. Verfahren nach Anspruch 5, dadurch gekennzeichnet, daß das Produkt oder Gemisch der Produkte der Formel (III) im Laufe der Zeitspanne zugefügt wird, die der Entfernung der ersten, während der Polykondensation gebildeten, 95 Prozent $POCl_3$ entspricht.

7. Zusammensetzung, enthaltend mehrere Produkte der Formel (III) mit verschiedenen OR-Substitutionsgraden an den Phosphoratomen.

8. Nicht vernetzte Polychlorphosphazene und davon abgeleitete Polyorganophosphazene, an deren Kette ein Produkt oder Gemisch der Produkte der Formel (III) chemisch gebunden ist.

FIG. 1

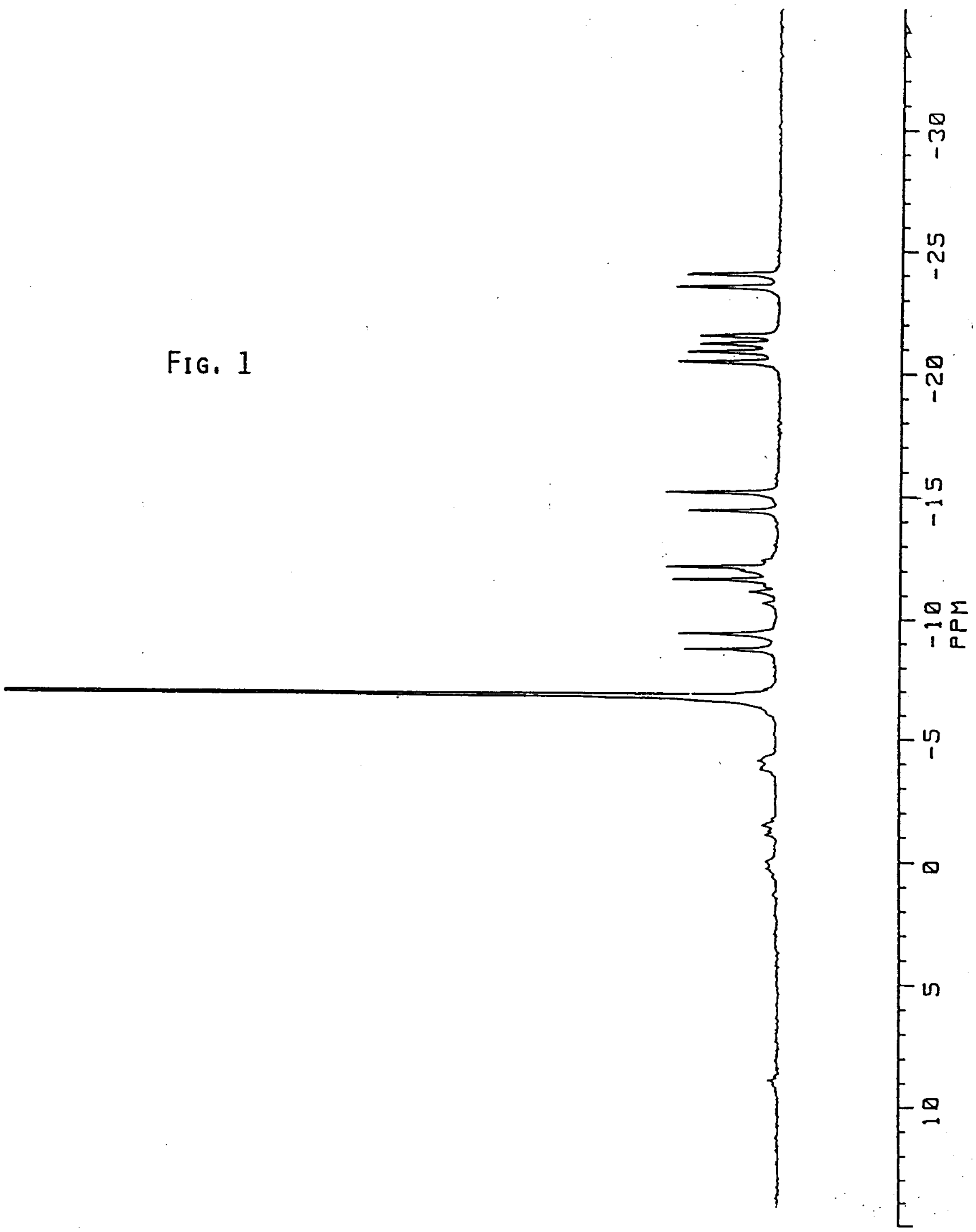

FIG. 2